# FASCICULE DE BREVET EUROPEEN

(11) **EP 0 448 447 B1**
(45) Date de publication et mention de la délivrance du brevet: **25.01.1995**
(21) Numéro de dépôt: 91400691.1
(22) Date de dépôt: 14.03.1991
(51) Int. Cl.: C03B 23/027

(54) **Procédé et dispositif pour le bombage de feuilles de verre**
Verfahren und Vorrichtung zum Biegen von Glasscheiben
Method and apparatus for bending glass-sheets

(30) Priorité: 20.03.1990 FR 9003513
(43) Date de publication de la demande: 25.09.1991
(73) Titulaire: SAINT GOBAIN VITRAGE INTERNATIONAL, 92400 Courbevoie (FR)
(72) Inventeur: Weber, Frédéric, F-60200 Compiègne (FR)
(74) Mandataire: Muller, René

(56) Documents cités:
- DE-B- 1 100 238
- GB-A- 2 051 037

## Description

La présente invention concerne le cintrage ou le bombage de feuilles de verre et en particulier le cintrage sur une forme de bombage ou configuration évidée désignée communément par cadre ou squelette de bombage.

Le bombage des feuilles de verre sur squelette est une technique communément employée pour bomber les feuilles de verre et en particulier pour bomber simultanément les deux feuilles de verre destinées à former un vitrage feuilleté bombé tel un pare-brise de véhicule de transport. Dans cette technique, les deux feuilles de verre posées l'une sur l'autre avec interposition d'un agent de séparation adéquat sont supportées le long de leurs parties d'extrémités marginales d'une façon sensiblement horizontale par un cadre ayant le profil désiré, c'est-à-dire le profil correspondant à celui définitif des deux feuilles de verre bombées. Ainsi supportées, les deux feuilles de verre passent dans un four de bombage, généralement un four ayant des zones de températures différentes.

La première de ces zones est une zone de préchauffage dans laquelle les feuilles de verre sont chauffées jusqu'à une température du verre sensiblement proche du point de ramollissement. La zone suivante est la zone de bombage où les feuilles de verre portées à une température d'environ 600°C vont se cintrer progressivement par gravité pour épouser finalement la forme du cadre. Les feuilles de verre sont ensuite refroidies pour être à la sortie du four tunnel retirées du cadre de formage.

Ce procédé de bombage sur squelette donne entière satisfaction surtout lorsque les courbures ne sont pas très accentuées et/ou lorsque le bombage est essentiellement cylindrique. Lorsque les courbures sont plus accentuées et en particulier au voisinage de la périphérie des vitrages, il peut se produire ce que l'on appelle un contre-bombage aux coins des feuilles de verre, généralement à deux de ces coins, ou même aux quatre coins selon la géométrie du vitrage, c'est-à-dire ses courbures et aussi sa forme de découpe. Le contre-bombage correspond à une inversion non désirée dans ce cas de la courbure.

Les feuilles de verre bombées obtenues ne répondent plus alors aux conditions imposées au vitrage pour pouvoir être montées dans une baie de carrosserie.

Pour remédier au contre-bombage, dans le cas du bombage d'une seule feuille de verre destinée à être trempée thermiquement et qui à cette fin est fortement chauffée, on a déjà proposé de maintenir les bords de ladite feuille pendant l'opération de bombage. Ce procédé n'est pas entièrement satisfaisant en particulier dans le cas du bombage de plusieurs feuilles de verre simultanément.

L'invention propose un procédé et un dispositif qui vise à pallier les inconvénients précités, permettant de supprimer le contre-bombage, notamment lors du bombage de deux feuilles de verre simultanément.

On a déjà proposé dans la publication de brevet européen EP-A-0 250 311 l'utilisation d'une force additionnelle à la force de gravité s'appliquant sur la face supérieure de la feuille de verre du dessus aux emplacements sujets à un contre-bombage. Ce procédé donne satisfaction pour un grand nombre de formes de vitrages. Néanmoins, il ne peut être utilisé pour toutes les formes de vitrages, sujettes à un contre bombage non désiré au cours de leur passage dans les fours de bombage par gravité. En outre, il est nécessaire de supprimer le contact de l'organe agissant au cours de l'homogénéisation des températures dans la dernière phase du procédé de bombage par gravité.

On a encore proposé dans le document GB-A-2 051 037 un bombage sur cadre en deux étapes, une première étape par gravité et une seconde étape non pas par gravité, mais par un pliage de la feuille de verre suivant une ligne par une action de basculement des parties latérales du cadre. Il n'est pas question dans ce document de bombage de feuilles de verre sujettes à un contre-bombage, mais bien d'obtenir une ligne de pliage.

L'invention obvie aux inconvénients cités. Elle propose un nouveau procédé de bombage par gravité d'une ou de plusieurs feuilles de verre simultanément, permettant de supprimer le contre-bombage, qui ne laisse aucune marque sur la partie visible de la ou des feuilles de verre et qui permet en outre une bonne homogénéisation de la température des feuilles de verre après le bombage proprement dit.

Le procédé de bombage par gravité sur cadre conformément à l'invention, d'au moins une feuille de verre, comprend au moins deux étapes pour le bombage proprement dit au cours duquel la ou les feuilles de verre subissent une modification de leur forme par gravité en étant supportées en périphérie, une première étape au cours de laquelle on bombe la ou les feuilles de verre selon une première forme correspondant à une ébauche de la forme définitive en supportant la ou les feuilles de verre suivant une première ligne périphérique et une seconde étape au cours de laquelle on bombe la ou les feuilles de verre par gravité selon la forme définitive en supportant la ou les feuilles de verre suivant une seconde ligne périphérique de courbure différente qui se substitue à la première.

Sous un des aspects de l'invention, la première étape de bombage procurant la forme d'une ébauche consiste à bomber essentiellement selon une première courbure correspondant généralement à la courbure transversale de la ou des feuilles de verre, sans modification importante de la seconde courbure correspondant alors à la courbure longitudinale de la ou des feuilles de verre, et la seconde étape consiste à terminer la première courbure et réaliser essentiellement la seconde courbure.

En donnant une première forme selon un profil désiré à la ou les feuilles de verre, on évite ainsi les contre-bombage non désirés.

Sous un autre aspect de l'invention, la première étape de bombage consiste à bomber essentiellement selon la courbure transversale et selon la courbure longitudinale localisée pour cette dernière à la partie médiane de la feuille ou des feuilles de verre, et la seconde étape de bombage consiste en un bombage complémentaire essentiellement longitudinal et localisé sur les parties périphériques de la ou des feuilles de verre.

Selon une mise en oeuvre du procédé de l'invention, on réalise la première étape de bombage en supportant la ou les feuilles de verre suivant une première ligne périphérique qui le cas échéant peut varier au cours de la première étape, et on réalise la seconde étape de bombage en supportant la ou les feuilles de verre suivant une seconde ligne périphérique de courbure différente qui se substitue à la première.

Sous une forme de mise en oeuvre du procédé, les deux lignes périphériques sont entièrement distinctes l'une de l'autre, l'une étant disposée à l'intérieur de l'autre. La substitution d'une ligne par l'autre s'opère soit par une élévation du niveau de la deuxième ligne par rapport au niveau de la première, soit par un abaissement du niveau de cette première ligne.

Sous une autre forme de mise en oeuvre du procédé, cette seconde ligne périphérique est distincte en parties seulement de la première ligne. La distinction ou différence peut porter sur les parties latérales des deux lignes.

Dans ce cas, la différence consiste généralement en ce que les parties latérales de la deuxième ligne présentent des courbures plus accentuées et sont placées à un niveau supérieur au niveau des parties latérales de la première ligne.

Les lignes périphériques selon l'invention sont généralement des lignes continues en particulier pour la ligne définissant la forme bombée définitive de la ou des feuilles de verre, bien qu'une ligne formée de plusieurs points disposés en des emplacements adéquats puisse également convenir, en particulier pour la ligne définissant l'ébauche.

Sous un des aspects de l'invention, la première ligne périphérique destinée à la réalisation de la première étape de bombage est telle que l'angle formé par tout vecteur tangent à ladite ligne avec le plan horizontal est inférieur à 20 degrés et de préférence inférieur à 15 degrés.

L'invention concerne également un dispositif pour le bombage par gravité d'une ou de plusieurs feuilles de verre empilées et en particulier un nouveau cadre de bombage.

Le cadre de bombage selon l'invention comprend une bande périphérique dont au moins une partie est doublée en comportant deux éléments, un élément formant un cadre dit ébauche et étant utilisé pour supporter la périphérie de la ou des feuilles de verre à bomber durant la première étape de bombage consistant à former une ébauche de forme, et un second élément formant un cadre dit définitif se substituant au premier et étant utilisé pour supporter la périphérie de la ou des feuilles de verre durant la deuxième étape de bombage pour arriver à la forme définitive.

Selon une réalisation du dispositif selon l'invention, la partie doublée peut s'étendre sur toute la périphérie du cadre.

Selon une autre réalisation du dispositif, la partie doublée est limitée aux deux parties latérales du cadre.

Dans une réalisation du dispositif selon l'invention, celui-ci est constitué d'un cadre ébauche fixe sur lequel sont montés articulés, aux emplacements désirés, en particulier sur les deux parties latérales, des éléments pivotants pouvant occuper deux positions, une position dite de repos, éclipsée, ces éléments pivotants étant disposés à un niveau inférieur aux parties latérales du cadre fixe, et une position dite de travail, lorsque ces éléments se substituent aux parties latérales fixes pour supporter les feuilles à bomber selon une ligne périphérique située à un niveau supérieur au niveau des parties latérales fixes, pour former ainsi un cadre définitif. Des moyens permettant le pivotement des éléments pivotant sont prévus. Ces moyens peuvent être un système de poids maintenus bloqués dans une position et que l'on débloque au moment désiré, ou tout autre système adapté, en particulier un système utilisant le poids du cadre lui-même.

Dans une variante, le cadre ébauche présente une partie pivotante qui en position de travail est disposée à un niveau supérieur à celui du cadre définitif fixe dans cette variante, et qui en position de repos est abaissé à un niveau inférieur à celui de la partie agissante du cadre définitif.

Selon une autre variante du dispositif, le cadre ébauche et le cadre définitif présentent tout deux des parties pivotantes.

Le cadre ébauche peut présenter des parties pivotantes qui pivotent au fur et à mesure de la formation de l'ébauche. Dans ce cas, la première ligne périphérique de bombage que l'on a précédemment définie selon l'invention comme étant la ligne du support de la ou des feuilles de verre pour la formation de l'ébauche est une ligne dont la forme varie au fur et à mesure de la formation de l'ébauche. Généralement, les parties pivotantes du cadre ébauche sont les parties latérales qui portent alors les traverses latérales pivotantes destinées à former le cadre définitif.

D'autres avantages et caractéristiques de l'invention apparaitront dans la description suivante d'une forme de réalisation d'un dispositif selon l'invention, faite en référence aux figures.

La figure 1 représente une réalisation d'un dispositif ou cadre de bombage dans une vue en perspective.

Les figures 2a et 2b représentent le montage de la partie pivotante de cadre représenté sur la figure 1.

La figure 3 représente schématiquement la disposition du cadre de bombage de la figure 1 au cours de la première étape de bombage.

La figure 4 représente schématiquement la disposition du cadre de bombage de la figure 1 au cours de la seconde étape de bombage.

La figure 5 représente schématiquement une réalisation d'un dispositif pouvant être utilisé pour le bombage d'un vitrage sujet à des contre-bombage à proximité de ses quatre coins.

La figure 6 représente schématiquement la configuration du dispositif de bombage de la figure 5, adoptée au cours de la deuxième étape de bombage.

Les figures 7a, 7b et 7c représentent schématiquement l'évolution du bombage d'une feuille de verre sur un cadre de bombage connu standard.

Les figures 8a, 8b, 8c représentent schématiquement l'évolution du bombage d'une feuille de verre sur un cadre de bombage selon l'invention.

La figure 9 représente schématiquement une variante d'un dispositif pouvant être utilisé pour le bombage d'un vitrage sujet à des contre-bombage à proximité de ses quatre coins.

La figure 10 représente schématiquement le dispositif de la figure 9 dans sa configuration correspondant à la deuxième étape de bombage.

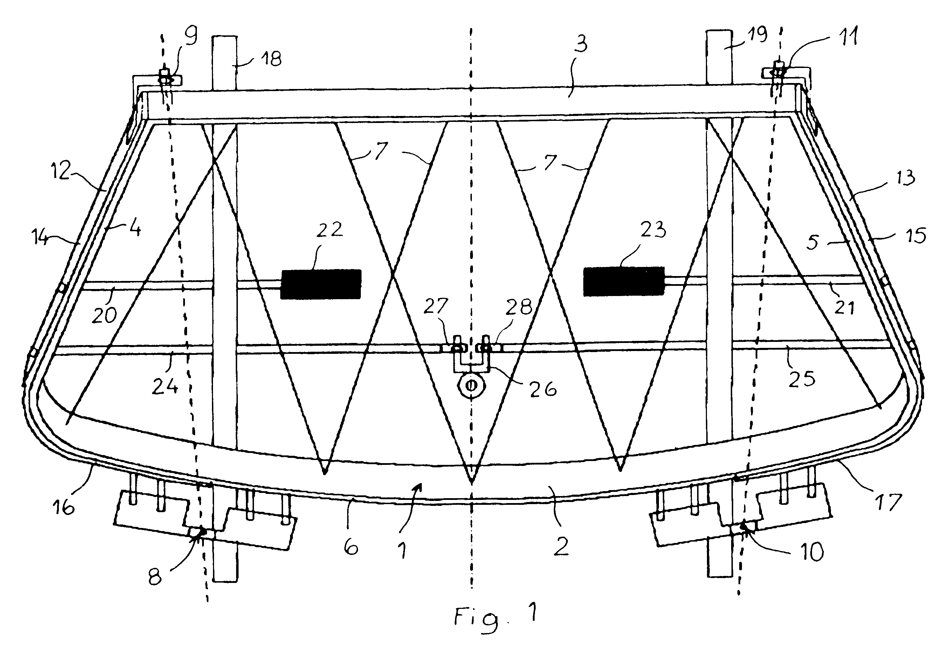

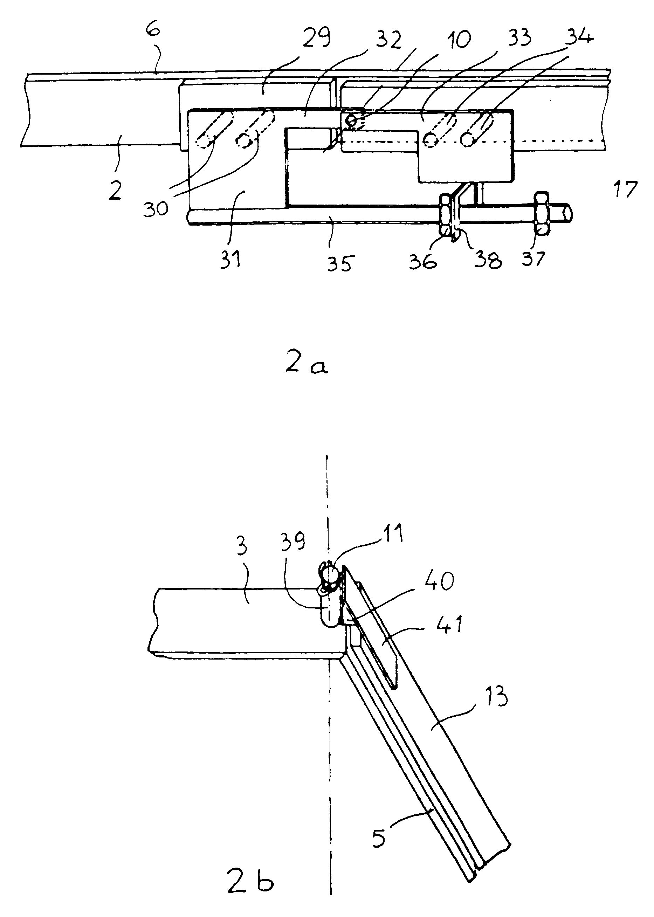

Le dispositif représenté sur la figure 1 comprend un cadre fixe 1 disposé horizontalement, comportant deux parties longitudinales ou longerons 2,3 et deux parties transversales ou traverses d'extrémités 4,5. On peut noter que le longeron 2 montré ici présente une ligne de courbure (en projection dans le plan horizontal) relativement accentuée, ce qui correspond à une découpe de vitrages particulièrement propice à des contre-bombage à proximité des deux coins inférieurs. L'arête supérieure 6 du cadre fixe constitue la ligne de bombage qui correspond à la forme d'ébauche pour les feuilles de verre à bomber. Ce cadre fixe est le cadre ébauche. Les longerons 2,3 et les traverses 4,5 sont reliés par des entretoises 7 qui assurent la rigidité du système. Les deux longerons 2,3 portent près de leurs extrémités, comme décrit par la suite, des axes essentiellement horizontaux 8, 9, 10, 11 (les axes 8 et 9 étant alignés ici, de même pour les deux axes 10 et 11) autour desquels sont montées articulées, deux traverses pivotantes 12, 13 qui présentent un profil correspondant au profil définitif souhaité pour les parties latérales des feuilles à bomber. Un montage d'une traverse pivotante est représenté sur les figures 2a et 2b commentées par la suite.

Les deux traverses pivotantes 12, 13 sont formées chacune d'une partie transversale 14, 15 par rapport au cadre et d'une aile 16, 17, qui rejoint le longeron 2. Les courbures de ces traverses pivotantes 12, 13 correspondent au profil de bombage définitif comme décrit par la suite. Ces courbures sont donc plus accentuées que les courbures des traverses fixes du cadre.

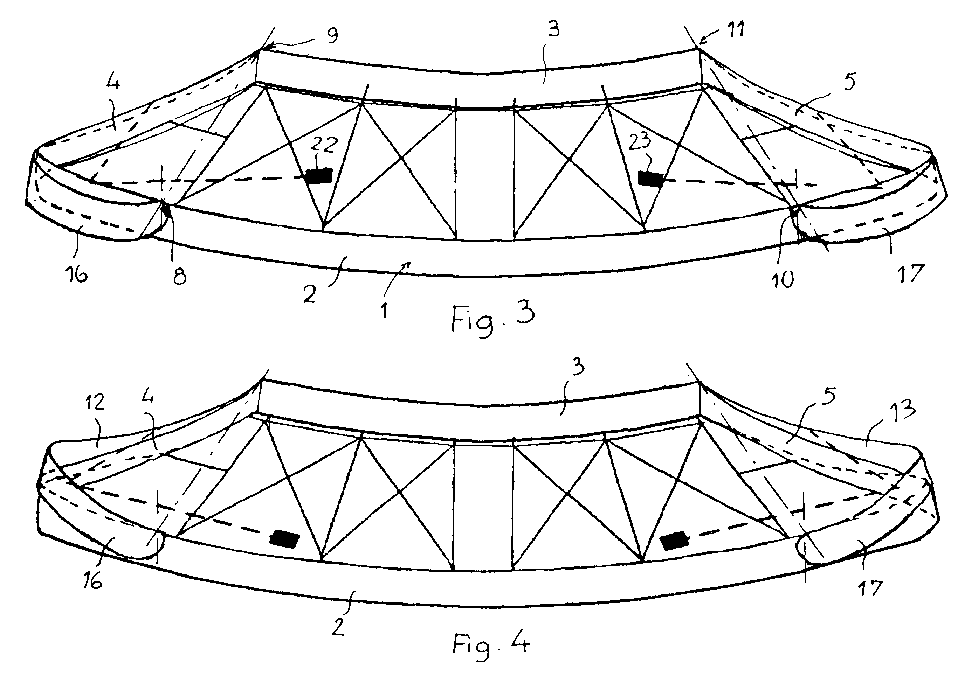

Les deux traverses pivotantes 12, 13 peuvent occuper deux positions comme représentées schématiquement sur les figures 3 et 4. Une première position qui est celle représentée ici sur les figures 1 et 3 est la position dite de repos, ou éclipsée par rapport au cadre fixe 1, en particulier par rapport aux traverses latérales fixes 4,5 de ce cadre. La deuxième position représentée sur la figure 4 est la position de travail. Dans ce cas, le profil de l'arête supérieure des traverses pivotantes 12, 13 prolonge régulièrement l'arête supérieure des longerons 2, 3 selon une courbe tangente à la courbe de ces longerons 2, 3, l'ensemble formant la ligne de bombage périphérique définitive.

Deux rails 18, 19 sont prévus sous le cadre fixe permettant le montage du cadre de bombage sur un chariot, non représenté, qui véhicule de façon connue le cadre dans le four de bombage.

Au milieu des deux traverses pivotantes 12, 13 sont fixés des bras 20, 21 qui reviennent sous le cadre et qui portent des poids 22, 23. Lorsqu'ils sont libres d'agir, ces poids 22, 23 maintiennent les deux traverses pivotantes 12, 13 dans la position de bombage définitive, c'est-à-dire à un niveau supérieur à celui des traverses fixes 4, 5. Deux tiges 24, 25 appartenant à un système permettant de bloquer et de libérer l'action des poids sont également montées sur les deux traverses pivotantes 12, 13. Les deux tiges 24, 25 peuvent être reliées par un cavalier 26 qui se place dans deux oeillets 27, 28 d'extrémités, portés par les tiges 24, 25, lorsque les traverses 12, 13 pivotantes sont en position basse, éclipsée.

Le montage des traverses pivotantes est conçu de façon telle que les traverses pivotantes viennent doubler les traverses fixes de la façon la plus rapprochée possible, afin que la ligne de contact périphérique entre ces traverses pivotantes et la feuille de verre soit la plus proche de la ligne de contact entre les traverses fixes et ladite feuille de verre.

Sur la figure 2a, on a représenté un détail du montage de l'aile 17 d'une traverse pivotante 13 sur le longeron avant 2 du cadre fixe 1. Le cadre fixe muni d'un renfort 29 porte solidairement au bout de deux tiges 30, une plaque 31 présentant un bras 32 dont l'extrémité porte un axe 10 autour duquel peut pivoter une autre plaque 33 tenue par deux tiges 34 fixées sur l'aile 17 de la traverse pivotante 13. L'axe de pivotement 10 est situé au niveau de l'arête supérieur 6 du cadre fixe.

La plaque 31 porte également une tige filetée 35 sur laquelle sont disposés deux écrous 36, 37 aux emplacements adéquats qui délimitent l'amplitude du mouvement de pivotement de la traverse en coopération avec une butée 38 portée par la plaque 33 solidaire de la traverse pivotante.

Sur la figure 2b on a représenté le montage de la traverse sur le longeron arrière 3 du cadre fixe 1. L'extrémité du longeron porte un axe 11 autour duquel est monté tournant un alésage 39 solidaire de la traverse pivotante 13 par l'intermédiaire d'une équerre 40 et d'une plaque 41.

Le fonctionnement du dispositif est maintenant décrit en relation avec les figures 3 et 4. Ce dispositif est utilisé pour le bombage de deux feuilles de verre destinées à être utilisées pour fabriquer des vitrages feuilletés, par exemple un pare-brise de véhicule à moteur. Le vitrage bombé à fabriquer est tel que lorsqu'il est placé dans une position horizontale, un vecteur tangent à l'extrémité latérale de la partie la plus large du vitrage forme un angle d'environ 45 degrés avec le plan horizontal.

Le dispositif est dans sa configuration dans laquelle les traverses pivotantes sont en position éclipsée conformément à la figure 3. Le maintien de cette position est assuré par le cavalier 26 qui relie les deux tiges 24, 25.

Les deux feuilles de verre sont placées sur le cadre en étant centrées par exemple grâce à des molettes (non représentées) disposées sur le pourtour du cadre. La feuille de verre inférieure (non représentée) porte en différents points sur le cadre à environ 5 mm de son bord. Au coin du longeron 2 et de la traverse 4, l'angle formé par un vecteur tangeant à l'arête supérieure du cadre fixe avec un plan horizontal est d'environ 15 degrés.

Le dispositif est alors amené dans le four de bombage. Dans une première phase, l'ensemble subit un préchauffage. Puis, dans une deuxième phase qui porte et maintient le verre à une température de l'ordre de 600°C environ, les feuilles de verre s'affaissent par gravité et prennent appui sur le pourtour du cadre fixe principalement sur les parties centrales des longerons 2, 3, en prenant ainsi la forme d'une ébauche des courbures définitives à obtenir. Cette forme ébauche présente notamment une courbure transversale proche de la courbure transversale définitive. Lorsque cette forme d'ébauche est obtenue, on retire à l'aide de moyens adéquats le cavalier 26 qui solidarise les deux tiges 24, 25 et on libère ainsi l'action des deux poids 22, 23. Cette action provoque le pivotement des deux traverses pivotantes 12, 13 qui au cours de ce mouvement se substituent aux deux parties latérales fixes 4, 5 pour supporter les feuilles de verre suivant une ligne périphérique très voisine et décalée extérieurement de la première ligne périphérique formée par les parties latérales fixes, de la distance que l'on choisit de préférence minimale.

Cette distance minimale correspond généralement à l'épaisseur des traverses pivotantes augmentée du jeu nécessaire pour le doublement très rapproché des traverses pivotantes des traverses fixes. Les deux lignes de support périphérique pour les parties transversales sont ainsi très rapprochées et toutes deux très proches du bord de la feuille inférieure. Les deux marques périphériques rapprochées peuvent ainsi être dans la zone couverte par le joint utilisé pour le montage du vitrage dans la baie de carrosserie et sont donc invisibles sur le vitrage monté.

Lorsque les deux parties pivotantes se sont substituer aux parties fixes comme support périphérique des feuilles de verre, le dispositif est alors dans la configuration représentée sur la figure 4. Les ailes 16, 17 des parties pivotantes prolongent ainsi les parties centrales des deux longerons 2, 3 suivant une ligne régulière correspondant à la courbure définitive désirée pour les feuilles de verre. La zone médiane des parties pivotantes présente la courbure définitive transversale qui est plus accentuée que la courbure présentée par les traverses fixes du cadre.

On procède ainsi au bombage complémentaire pour obtenir la courbure définitive des feuilles de verre.

Lorsque la forme définitive est obtenue, on fait subir à l'ensemble une homogénéisation des températures puis le dispositif est retiré du four de bombage.

Les deux feuilles de verre sont retirées du cadre de bombage et elles peuvent être utilisées pour la fabrication d'un vitrage feuilleté par interposition entre-elles d'une feuille intercalaire en polyvinylbutyral par exemple.

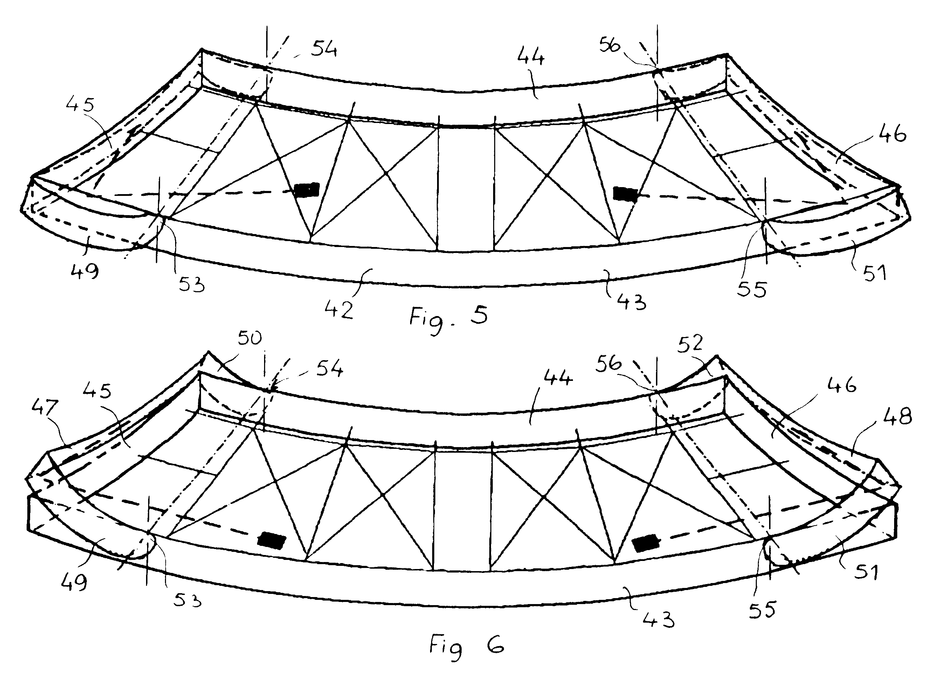

Sur les figures 5 et 6, on a représenté un dispositif pouvant être utilisé pour le bombage d'un vitrage sujet à des contre-bombage à proximité de ses quatre coins. Ce dispositif selon l'invention comprend essentiellement les mêmes éléments que celui décrit précédemment, sauf en ce qui concerne ses parties latérales. Ainsi, le dispositif comprend un cadre fixe 42 formé de deux longerons 43, 44 et de deux traverses d'extrémités 45, 46. Ses traverses pivotantes 47, 48 présentent ici chacune deux ailes 49, 50, 51, 52 qui sont montées pivotantes autour des axes horizontaux 53, 54, 55, 56 comme dans le dispositif précédent pour le montage des traverses pivotantes 12, 13 sur le longeron avant 2.

Le fonctionnement de ce dispositif est analogue à celui décrit précédemment. La ou les feuilles de verre sont placées horizontalement sur le cadre fixe alors que le dispositif est en position selon la figure 5. La première étape de bombage procurant la forme ébauche se déroule sur le cadre fixe. La seconde étape de bombage procurant la forme définitive s'effectue alors que le dispositif est dans la configuration selon la figure 6. Le passage d'une configuration à une autre s'effectue comme précédemment par l'action de poids 22, 23 et d'un système de blocage et déblocage avec tiges et cavalier (non représentés).

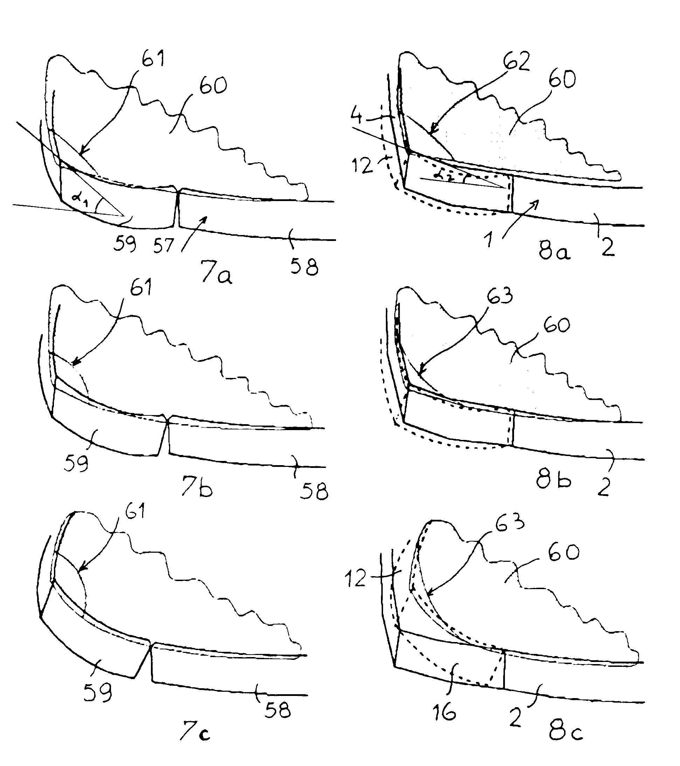

A l'aide des figures 7a, 7b, 7c et des figures 8a, 8b, 8c on a mis en évidence les différences dans l'évolution du bombage d'une feuille ou de deux feuilles de verre selon que l'on utilise un cadre de bombage connu comme représenté sur les figures 7a, 7b, 7c ou un cadre de bombage selon l'invention comme représenté sur les figures 8a, 8b, 8c.

Sur le squelette standard 57 qui est ici un squelette articulé avec une partie fixe 58 et une partie pivotante 59 qui pivote au fur et à mesure du bombage, l'angle formé par le plan horizontal qui est celui de la feuille de verre et le cadre dans le coin inférieur gauche est d'environ 35 degrés. Il se produit au début du bombage sur la feuille de verre 60, comme représenté sur la figure 7a, un léger contre-bombage selon la ligne 61. Au cours du bombage, comme représenté sur la figure 7b, la feuille de verre se galbe et le contre-bombage suivant le ligne 61 est accentué. A la fin du bombage, comme représenté sur la figure 7c, la feuille de verre présente un bombage définitif avec un contre-bombage prononcé suivant la figure 61.

Sur le squelette 1 selon l'invention au début du bombage, comme représenté sur la figure 8a, l'angle formé par la feuille de verre 60, c'est-à-dire le plan horizontal, et le cadre fixe dans le coin inférieur gauche, est de l'ordre de 15 degrés. Au début du bombage, il ne se produit qu'un léger contre-bombage selon la ligne 62. Au cours du bombage, comme représenté sur la figure 8b, le verre est en appui sur le cadre fixe et il apparait une courbure positive selon la ligne 63.

Au cours de l'étape définitive du bombage et à la fin de l'opération comme représenté sur la figure 8c, le verre est galbé et il n'y a pas de contre-bombage. La courbure est positive selon la ligne 63.

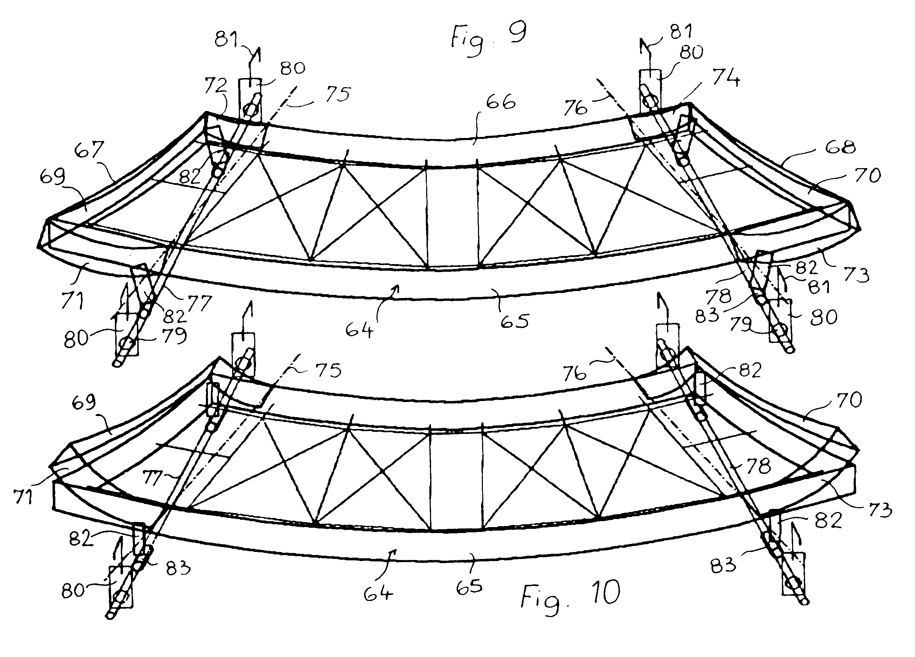

Sur les figures 9 et 10, on a représenté une variante d'un cadre pour le bombage d'un vitrage sujet à des contre-bombage à proximité de ses quatre coins. Le cadre ici reprend les caractéristiques essentielles du cadre décrit en relation avec les figures 5 et 6. Il comprend un cadre fixe 64 formé de deux longerons 65, 66 et de deux traverses d'extrémité 67, 68, ainsi que deux traverses pivotantes 69, 70, présentent chacune deux ailes 71, 72, 73, 74, montées pivotantes autour des quatre axes alignés deux à deux selon les lignes d'axes 75, 76, portés par le cadre fixe à un niveau correspondant à celui de l'arête supérieure de ce cadre. Le dispositif diffère du cadre précédent par les moyens provoquant le basculement des traverses pivotantes 69, 70. Le montage du cadre sur le chariot destiné à véhiculé le cadre dans le four de bombage, est réalisé ici par l'intermédiaire de deux barres rondes 77, 78 s'étendant transversalement et montées tournant librement en leurs extrémités dans des trous 79 prévus dans des plaques 80 surmontées de crochets 81 permettant l'accrochage du cadre sur le chariot (non représenté). Le cadre est relié aux deux barres 77, 78 par l'intermédiaire de bras 82 montés sur des bagues 83 pouvant pivoter autour des barres 77, 78. Les bras 82 sont fixés aux ailes des traverses pivotantes. Celles-ci portent comme dans le dispositif décrit précédemment deux tiges (non représenté) pouvant être reliées par un cavalier lorsque les traverses sont en position éclipsées au début de l'opération de bombage, comme représenté sur la figure 9. Dans cette position, les bras 85 solidaires des traverses pivotantes sont inclinés par rapport à la verticale. Lorsqu'on retire le cavalier pour la deuxième phase de bombage, les traverses pivotantes ainsi libérées subissent l'action du poids du cadre et peuvent pivoter autour de leur axes 75, 76 en même temps que les bras pivotent autour des deux barres 77, 78 pour venir en position verticale d'équilibre.

Le cadre de bombage est alors dans la position représentée sur la figure 10. Dans cette variante, c'est donc le poids du cadre et non pas des poids qui provoque le pivotement, au moment désiré, des traverses pivotantes pour le passage de la configuration cadre ébauche à la configuration cadre définitif.

Le procédé et le dispositif selon l'invention s'appliquent avantageusement au bombage par gravité de feuilles de verre sujettes à un contre-bombage.

## Revendications

1. Procédé pour le bombage sur cadre d'au moins une feuille de verre (60) par gravité au cours duquel la ou les feuilles de verre empilées, disposées sur un cadre (1) de bombage en position horizontale sont élevées à la température de déformation et viennent épouser le profil du cadre de bombage par effet de gravité, dans lequel on effectue le bombage en au moins deux étapes au cours desquelles la ou les feuilles de verre subissent une déformation, caractérisé en ce qu'au cours d'une première étape on bombe par gravité la ou les feuilles de verre selon une première forme correspondant à une ébauche de la forme définitive en supportant la ou les feuilles de verre suivant une première ligne périphérique (2, 3, 4, 5 ; 43, 44, 45, 46), et qu'au cours d'une seconde étape on bombe par gravité la ou les feuilles de verre selon la forme définitive en supportant la ou les feuilles de verre suivant une seconde ligne périphérique (2, 3, 12, 13 ; 43, 44, 47, 48), de courbure différente qui se substitue à la première.

2. Procédé selon la revendication 1, caractérisé en ce que dans la première étape de bombage, on donne une forme d'ébauche en bombant essentiellement selon une première courbure, sans modification importante de la deuxième courbure, et en ce que dans la deuxième étape on termine la première courbure et on réalise essentiellement la deuxième courbure.

3. Procédé selon une des revendications 1 ou 2, caractérisé en ce que dans la première étape de bombage on bombe essentiellement selon la courbure transversale et selon la courbure longitudinale localisée pour cette dernière à la partie médiane de la ou des feuilles de verre (60) et en ce que dans la deuxième étape on réalise le bombage complémentaire essentiellement longitudinal et localisé sur les parties périphériques de la ou des feuilles de verre.

4. Procédé selon l'une des revendications 1 à 3, caractérisé en ce que les lignes périphériques sont entièrement distinctes l'une de l'autre, l'une étant à l'intérieur de l'autre.

5. Procédé selon l'une des revendications 1 à 3, caractérisé en ce que la seconde ligne périphérique est obtenue par modification d'au moins une partie de la première ligne périphérique.

6. Procédé selon la revendication 5, caractérisé en ce que la modification porte sur les parties latérales de la première ligne.

7. Procédé selon une des revendications 5 ou 6, caractérisé en ce que la modification consiste à élever le niveau d'au moins une partie de la première ligne.

8. Procédé selon une des revendications 1 à 7, caractérisé en ce que la première ligne périphérique est telle que l'angle formé par tout vecteur tangent à ladite ligne avec le plan horizontal est inférieur à 20 degrés et de préférence inférieur à 15 degrés.

9. Dispositif pour le bombage sur cadre par gravité d'au moins une feuille de verre, caractérisé en ce qu'il comprend un cadre dont au moins une partie est doublée en comportant deux éléments, un élément ou cadre ébauche (2, 3, 4, 5) étant utilisé pour supporter la périphérie de la ou des feuilles de verre durant une première étape de bombage consistant à former une ébauche de forme, un second élément ou cadre définitif (2, 3, 12, 13) étant utilisé pour supporter la périphérie de la ou des feuilles de verre durant la deuxième étape de bombage pour arriver à la forme définitive.

10. Dispositif selon la revendication 9, caractérisé en ce que la partie doublée s'étend sur toute la périphérie du cadre.

11. Dispositif selon la revendication 9, caractérisé en ce qu'il comporte un cadre ébauche sur lequel sont montés articulés, aux emplacements désirés, des éléments pivotants (12, 13, 47, 48) pouvant se substituer à des parties du cadre ébauche pour la deuxième étape de bombage, le dispositif comprenant des moyens (20, 21, 22, 23) permettant le pivotement des éléments.

12. Dispositif selon la revendication 11, caractérisé en ce que les éléments pivotants sont des traverses d'extrémités (12, 13, 47, 48).

13. Dispositif selon la revendication 12, caractérisé en ce que les traverses pivotantes sont montées pivotantes autour d'axes horizontaux (8, 9, 10, 11) portés par le cadre ébauche.

14. Dispositif selon une des revendications 12 à 13 caractérisé en ce que les traverses pivotantes sont maintenues en position éclipsées pour la première étape de bombage par deux tiges (20, 21) rattachées temporairement l'une à l'autre.

15. Dispositif selon une des revendications 12 à 14, caractérisé en ce que les traverses pivotantes sont pivotantes puis maintenues en position de travail pour la deuxième étape de bombage par l'action de poids (22, 23).

16. Dispositif selon une des revendications 12 à 14, caractérisé en ce que les traverses pivotantes sont pivotantes puis maintenues en position de travail pour la deuxième étape de bombage par l'action du propre poids du cadre.

17. Dispositif selon la revendication 16, caractérisé en ce que les traverses pivotantes articulées sur le cadre fixe sont montées solidairement sur des bras (82) montés eux mêmes sur des bagues (83) tournant autour de barres rondes (77, 78) appartenant aux moyens de montage du cadre sur le chariot assurant le transport du cadre dans le four de bombage.

18. Dispositif selon une des revendications 9 à 17, caractérisé en ce que le cadre ébauche est constitué d'une partie centrale fixe et de parties latérales pivotantes qui portent les traverses latérales pivotantes destinées à former le cadre définitif.

19. Dispositif selon une des revendications 9 à 18, caractérisé en ce que le cadre ébauche est tel que l'angle formé par tout vecteur tangent à ce cadre avec le plan horizontal est inférieur à 20 degrés et de préférence inférieur à 15 degrés.

20. Application du procédé selon une des revendications 1 à 8, pour le bombage des feuilles de verre sujettes à un contre-bombage.

21. Feuilles de verre bombées avec des courbures plus accentuées obtenues par la mise en oeuvre du procédé selon une des revendications 1 à 8.

## Claims

1. Method of bending at least one glass sheet (60) by gravity on a frame, during which the glass sheet or stacked glass sheets, disposed on a bending frame (1) in a horizontal position, are raised to the deformation temperature and adopt the profile of the bending frame under the effect of gravity, in which the bending is carried out in at least two steps, during which the glass sheet or sheets undergo a deformation, characterized in that, during a first bending step, the glass sheet or sheets are bent by gravity to a first shape corresponding to an approximation of the final shape by supporting the glass sheet or sheets along a first peripheral line (2, 3, 4, 5 ; 43, 44, 45, 46) and that, during a second step, the glass sheet or sheets are bent by gravity to the final shape by supporting the glass sheet or sheets along a second peripheral line (2, 3, 12, 13 ; 43, 44, 47, 48) of different curvature, which replaces the first.

2. Method according to claim 1, characterized in that, in the first bending step, an approximate shape is produced by bending essentially to a first curvature, without large modification to the second curvature, and that in the second step the first curvature is completed and the second curvature is basically obtained.

3. Method according to one of claims 1 or 2, characterized in that, in the first bending step, bending is carried out essentially to the transverse curvature and to the longitudinal curvature localised for the latter to the median part of the glass sheet or sheets (60) and in that, in the second step, the essentially longitudinal complementary bending, localised to the peripheral parts of the glass sheet or sheets, is carried out.

4. Method according to one of claims 1 to 3, characterized in that the peripheral lines are entirely distinct from each other, the one being inside the other.

5. Method according to one of claims 1 to 3, characterized in that the second peripheral line is obtained by modifying at least a part of the first peripheral line.

6. Method according to claim 5, characterized in that the modification is applied to the lateral parts of the first line.

7. Method according to one of claims 5 or 6, characterized in that the modification consists of raising the level of at least a portion of the first line.

8. Method according to one of claims 1 to 7, characterized in that the first peripheral line is such that the angle formed by any vector tangential to said line with the horizontal plane is less than 20° and preferably less than 15°.

9. Device for bending at least one glass sheet by gravity on a frame, characterized in that it comprises a frame, at least a portion of which is doubled by comprising two elements, a rough element or frame (2, 3, 4, 5) being used for supporting the periphery of the glass sheet or sheets during a first bending step, consisting of forming an approximate shape, a second definitive element or frame (2, 3, 12, 13) being used for supporting the periphery of the glass sheet or sheets during the second bending step for arriving at the definitive shape.

10. Device according to claim 9, characterized in that the doubled part extends around the entire periphery of the frame.

11. Device according to claim 9, characterized in that it comprises a rough frame, on which are mounted articulated, at the desired positions, pivoting elements (12, 13, 47, 48) capable of replacing parts of the rough frame for the second bending step, the device comprising means (20, 21, 22, 23) making possible pivoting of the elements.

12. Device according to claim 11, characterized in that the pivoting elements are end transverse members (12, 13, 47, 48).

13. Device according to claim 12, characterized in that the pivoting transverse members are pivotally mounted about horizontal axes (8, 9, 10, 11) carried by the rough frame.

14. Device according to one of claims 12 to 13, characterized in that the pivoting transverse members are held in a retracted position for the first bending step by two rods (20, 21), temporarily attached to each other.

15. Device according to one of claims 12 to 14, characterized in that the pivoting transverse members are pivotal, then held in the working position for the second bending step by the action of weights (22, 23).

16. Device according to one of claims 12 to 14, characterized in that the pivoting transverse members are pivotal then held in the working position for the second bending step by the action of the self-weight of the frame.

17. Device according to claim 16, characterized in that the pivoting transverse members articulated to the fixed frame are mounted firmly on arms (82), themselves mounted on rings (83) rotatable about round bars (77, 78) forming part of the means for mounting the frame on the carriage assuring transporting of the frame through the bending furnace.

18. Device according to one of claims 9 to 17, characterized in that the rough frame is constituted of a fixed central part and of pivoting lateral parts, which carry the pivoting lateral transverse members intended for forming the definitive frame.

19. Device according to one of claims 9 to 18, characterized in that the rough frame is such that the angle formed by any vector tangential to this frame with the horizontal plane is less than 20° and preferably less than 15°.

20. Application of the method according to one of claims 1 to 8 for the bending of glass sheets subjected to a counter-bending.

21. Glass sheets bent with more accentuated curvatures, obtained by the use of the method according to one of claims 1 to 8.

## Patentansprüche

1. Verfahren zum Biegen wenigstens einer Glasscheibe (60) auf einem Rahmen durch Schwerkraftwirkung, in dessen Verlauf die (übereinandergelegten) Glasscheibe/n, die auf einem Biegerahmen (1) in horizontaler Position angeordnet ist/sind, auf Verformungstemperatur gebracht wird/werden und durch Schwerkraftwirkung das Profil des Biegerahmens annimmt/annehmen und in welchem der Biegevorgang in wenigstens zwei Stufen erfolgt, in deren Verlauf die Glasscheibe/n eine Verformung erfährt/erfahren, **dadurch gekennzeichnet, daß** während einer ersten Stufe die Glasscheibe/n durch Schwerkraftwirkung gemäß einer ersten Form gebogen wird/werden, die einer Vorform der endgültigen Form entspricht, indem die Glasscheibe/n entlang einer ersten Umfangslinie (2, 3, 4, 5; 43, 44, 45, 46) gehalten wird/werden, **und daß** während einer zweiten Stufe die Glasscheibe/n durch Schwerkraftwirkung gemäß der Fertigform gebogen wird/werden, indem die Glasscheibe/n entlang einer zweiten Umfangslinie (2, 3, 12, 13; 43, 44, 47, 48) mit anderer Krümmung gehalten wird/werden, welche an die Stelle der ersten tritt.

2. Verfahren nach Anspruch 1, **dadurch gekennzeichnet, daß** man in der ersten Biegestufe eine Vorform verleiht, indem im wesentlichen gemäß einer ersten Krümmung gebogen wird, ohne dabei die zweite Krümmung bedeutend zu verändern, **und daß** in der zweiten Stufe die erste Biegung vollendet und im wesentlichen die zweite Biegung ausgeführt wird.

3. Verfahren nach Anspruch 1 oder 2, **dadurch gekennzeichnet**, **daß** in der ersten Biegestufe im wesentlichen gemäß der Querbiegung und gemäß der Längsbiegung gebogen wird, die sich im mittleren Bereich der Glasscheibe/n (60) befindet, **und daß** in der zweiten Stufe die ergänzende Biegung durchgeführt wird, die im wesentlichen längsgerichtet und auf den Umfangsbereichen der Glasscheibe/n lokalisiert ist.

4. Verfahren nach einem der Ansprüche 1 bis 3, **dadurch gekennzeichnet, daß** die Umfangslinien vollständig voneinander verschieden sind und sich eine innerhalb der anderen befindet.

5. Verfahren nach einem der Ansprüche 1 bis 3, **dadurch gekennzeichnet, daß** die zweite Umfangslinie durch Veränderung wenigstens eines Teils der ersten Umfangslinie erhalten wird.

6. Verfahren nach Anspruch 5, **dadurch gekennzeichnet, daß** sich die Veränderung auf die Seitenbereiche der ersten Linie erstreckt.

7. Verfahren nach Anspruch 5 oder 6, **dadurch gekennzeichnet**, **daß** die Veränderung im Anheben der Höhe wenigstens eines Bereichs der ersten Linie besteht.

8. Verfahren nach einem der Ansprüche 1 bis 7, **dadurch gekennzeichnet, daß** die erste Umfangslinie derart ist, daß der Winkel, der von jedem tangentialen Vektor an dieser Linie mit der horizontalen Ebene gebildet wird, kleiner als 20 und vorzugsweise kleiner als 15 Grad ist.

9. Vorrichtung zum Biegen wenigstens einer Glasscheibe auf einem Rahmen durch Schwerkraftwirkung, **dadurch gekennzeichnet, daß** sie einen Rahmen umfaßt, von welchem wenigstens ein Teil zweiteilig ausgeführt ist, indem er zwei Elemente enthält, wobei ein Element oder Vorformrahmen (2, 3, 4, 5) zum Tragen des Umfangs der Glasscheibe/n während einer ersten Biegestufe verwendet wird, die im Bilden einer Vorform besteht, und ein zweites Element oder Fertigrahmen (2, 3, 12, 13) zum Tragen des Umfangs der Glasscheibe/n während der zweiten Biegestufe zur Erzeugung der endgültigen Form verwendet wird.

10. Vorrichtung nach Anspruch 9, **dadurch gekennzeichnet, daß** sich der zweiteilige Teil über den gesamten Umfang des Rahmens erstreckt.

11. Vorrichtung nach Anspruch 9, **dadurch gekennzeichnet, daß** sie einen Vorformrahmen umfaßt, an welchem an gewünschten Stellen Schwenkelemente (12, 13, 47, 48) gelenkig angebracht sind, die sich in der zweiten Biegestufe an die Stelle von Teilen des Vorformrahmens setzen können, wobei die Vorrichtung Mittel (20, 21, 22, 23) enthält, die das Schwenken der Elemente erlauben.

12. Vorrichtung nach Anspruch 11, **dadurch gekennzeichnet, daß** die Schwenkelemente Endtraversen (12, 13, 47, 48) sind.

13. Vorrichtung nach Anspruch 12, **dadurch gekennzeichnet, daß** die Schwenktraversen um horizontale Achsen (8, 9, 10, 11) schwenkbar angebracht sind, die vom Vorformrahmen getragen werden.

14. Vorrichtung nach Anspruch 12 oder 13, **dadurch gekennzeichnet, daß** die Schwenktraversen in der ersten Biegestufe von zwei Stangen (20, 21), die zeitweilig miteinander verbunden sind, in abgesenkter Position festgehalten werden.

15. Vorrichtung nach einem der Ansprüche 12 bis 14, **dadurch gekennzeichnet, daß** die Schwenktraversen durch die Betätigung von Gewichten (22, 23) geschwenkt und anschließend in der zweiten Biegestufe in Arbeitsposition gehalten werden.

16. Vorrichtung nach einem der Ansprüche 12 bis 15, **dadurch gekennzeichnet, daß** die Schwenktraversen durch die Betätigung des Eigengewichts des Rahmens geschwenkt und anschließend in der zweiten Biegestufe in Arbeitsposition gehalten werden.

17. Vorrichtung nach Anspruch 16, **dadurch gekennzeichnet, daß** die gelenkigen Schwenktraversen an dem festen Rahmen fest auf Armen (82) angebracht sind, die ihrerseits auf Ringen (83) befestigt sind, welche sich um runde Stangen (77, 78) drehen, die zu Befestigungsmitteln des Rahmens auf dem Wagen gehören, der für den Transport des Rahmens in den Biegeofen sorgt.

18. Vorrichtung nach einem der Ansprüche 9 bis 17, **dadurch gekennzeichnet, daß** der Vorformrahmen aus einem festen zentralen Teil und schwenkbaren Seitenteilen besteht, welche die seitlichen Schwenktraversen tragen, die zur Bildung des Fertigrahmens vorgesehen sind.

19. Vorrichtung nach einem der Ansprüche 9 bis 18, **dadurch gekennzeichnet, daß** der Vorformrahmen derart ist, daß der Winkel, der von jedem tangentialen Vektor an diesem Rahmen mit der horizontalen Ebene gebildet wird, kleiner als 20 und vorzugweise kleiner als 15 Grad ist.

20. Verwendung des Verfahrens nach einem der Ansprüche 1 bis 8 zum Biegen von Glasscheiben, die einer Gegenbiegung unterliegen.

21. Gebogene Glascheiben mit stärkeren Krümmungen, die durch Ausführung des Verfahrens nach einem der Ansprüche 1 bis 8 hergestellt sind.
